# FASCICULE DE BREVET EUROPEEN

(11) **EP 1 178 748 B1**
(45) Date de publication et mention de la délivrance du brevet: **25.10.2006**
(21) Numéro de dépôt: 00929606.2
(22) Date de dépôt: 12.05.2000
(51) Int. Cl.: A47J 31/58

(54) **METHODE DE DETECTION DE L'ENTARTRAGE D'UNE CAFETIERE**
VERFAHREN ZUR ERKENNUNG DER VERKALKUNG EINER KAFFEEMASCHINE
METHOD FOR DETECTING SCALING IN A COFFEE MAKER

(30) Priorité: 12.05.1999 FR 9906252
(43) Date de publication de la demande: 13.02.2002
(73) Titulaire: SEB S.A., 69130 Ecully (FR)
(72) Inventeur: LEBRUN, Erik, F-65420 Ibos (FR); NOGUEZ, Jean-Michel, F-65100 Lourdes (FR)
(86) Numéro de dépôt international: PCT/FR2000/001284
(87) Numéro de publication internationale: WO 2000/069315

(56) Documents cités:
- EP-A- 0 380 369
- DE-A- 3 223 969
- US-A- 4 762 055

## Description

La présente invention concerne le domaine technique général des machines à boissons chaudes domestiques comportant une chaudière tubulaire. La présente invention concerne plus particulièrement mais non exclusivement les cafetières électriques.

Les chaudières tubulaires utilisées avec de l'eau non adoucie sont sujettes à l'entartrage. L'utilisateur doit procéder de manière répétée au détartrage de son appareil, à intervalles plus ou moins rapprochés selon la dureté de l'eau utilisée, s'il veut éviter la dégradation des performances de son appareil, l'appareil pouvant être rendu inutilisable si l'entartrage est trop prononcé.

Différents dispositifs ont été proposés pour indiquer à l'utilisateur que son appareil est en train de s'entartrer. Le document GB-A-2 109 097 divulgue un appareil comportant une chaudière dont la température est contrôlée par un capteur. Le signal issu de ce capteur est utilisé pour la régulation mais aussi pour la détection de l'entartrage. L'appareil comporte également des moyens de comptage du temps. Après un temps donné après la mise en marche de l'appareil, le signal du capteur de température ou l'une de ses dérivées est comparé avec un niveau de référence donné. Si ce niveau est dépassé, un signal d'avertissement indique à l'utilisateur que l'appareil commence à s'entartrer. Cette méthode de détection présente l'inconvénient de ne pas fonctionner correctement si l'utilisateur introduit dans le réservoir une quantité d'eau sensiblement plus faible que la capacité dudit réservoir. L'utilisation d'eau déjà chaude pour le remplissage peut également perturber le fonctionnement.

Le document EP-A-0 380 369 envisage de détecter l'entartrage d'un récipient chauffant : en fonction de l'élévation de la température de l'élément chauffant à la mise en marche, et/ou en fonction de la température absolue de l'élément chauffant à ébullition. Ce document s'intéresse de manière générale aux récipients pour faire bouillir l'eau, en particulier les bouilloires, mais n'aborde pas en particulier le problème de l'entartrage des chaudières tubulaires.

Le document US-A-4 762 055 divulgue une machine à boissons chaudes comportant une chaudière tubulaire alimentée par un réservoir d'eau froide, un capteur de température disposé sur la chaudière, des moyens de mesure du temps, des moyens de comparaison du signal du capteur de température avec des valeurs prédéterminées, et des moyens d'avertissement. La méthode de détection de l'entartrage décrite consiste à mesurer la période de temps entre la mise en route de l'appareil et la première coupure du thermostat. Lorsque la période de temps est réduite à 80% de la valeur normale, le signal d'alarme est activé.

Le document DE-A-32 23 969 divulgue une cafetière électrique comportant un réservoir d'eau qui est relié à un tube de circulation d'eau associé à un élément chauffant, un thermostat, des moyens électroniques de décompte du temps et des moyens d'avertissement. L'entartrage est détecté en fonction du temps de coupure du thermostat après la mise en route.

D'autres dispositifs connus dans des cafetières utilisent des méthodes de détection basées sur la mesure des temps de cycle du thermostat utilisé pour la régulation de la chaudière, après la première ouverture dudit thermostat. De telles méthodes présentent plusieurs inconvénients. Comme les thermostats généralement utilisés dans les cafetières présentent des tolérances minimales de ± 5°C, la mesure ainsi réalisée ne sera pas précise. De plus, tant que la chaudière n'est pas trop entartrée, le thermostat ne s'ouvre qu'après la fin de la préparation de la boisson. Lorsque la chaudière commence à s'entartrer, l'utilisateur n'est averti qu'à la fin du cycle de préparation de la boisson. Lorsque la chaudière est entartrée de manière importante, le thermostat régule durant la préparation, ce qui permet en observant le cycle de préparation de la boisson de détecter l'entartrage de manière plus précoce. Toutefois à ce stade d'entartrage le nettoyage de la chaudière reste difficile. En effet dans une machine à boisson chaude la poursuite de la chauffe après le passage de l'eau contribue à durcir le tartre déjà déposé. Cette situation est très fréquente, car elle se rencontre lorsque l'utilisateur souhaite le maintien au chaud de la boisson préparée, ou encore lorsque l'utilisateur oublie d'éteindre l'appareil.

Un objet de la présente invention est de proposer une méthode de détection de l'entartrage d'une chaudière tubulaire de machine à boissons chaudes, qui permette de détecter rapidement un début d'entartrage de la chaudière.

Un objet de la présente invention est de proposer une méthode de détection de l'entartrage d'une chaudière tubulaire de machine à boissons chaudes, qui permette de faciliter le détartrage de la chaudière.

Un objet de la présente invention est de proposer une méthode de détection de l'entartrage d'une chaudière tubulaire de machine à boissons chaudes, qui puisse fonctionner avec différentes quantités d'eau dans le réservoir.

Un objet de la présente invention est de proposer une méthode de détection de l'entartrage d'une chaudière tubulaire de machine à boissons chaudes, qui puisse fonctionner lorsque de l'eau chaude est introduite dans le réservoir.

Un autre objet de la présente invention est de proposer un dispositif pour la mise en oeuvre de ladite méthode de détection de l'entartrage d'une chaudière tubulaire de machine à boissons chaudes.

Les objets assignés à l'invention sont atteints avec une méthode de détection de l'entartrage d'une chaudière tubulaire de machine à boissons chaudes, ladite machine comportant une chaudière tubulaire alimentée par un réservoir d'eau froide, un capteur de température disposé sur la chaudière, des moyens de mesure du temps, des moyens de comparaison du signal du capteur de température avec des valeurs prédéterminées, des moyens d'avertissement, caractérisée en ce qu'elle consiste :
- après mise en marche de la machine, à mesurer la température à l'aide du capteur,
- à comparer la mesure avec une première valeur prédéterminée,
- si ladite valeur n'est pas atteinte, à effectuer une nouvelle mesure de température, et à comparer ladite nouvelle mesure avec ladite première valeur prédéterminée,
- lorsque ladite première valeur prédéterminée a été atteinte, à attendre pendant une durée prédéterminée,
- lorsque ladite durée a été atteinte, à mesurer la température à l'aide du capteur et à comparer la mesure complémentaire ainsi obtenue avec une deuxième valeur prédéterminée, supérieure à la température obtenue avec une chaudière non entartrée.
- si ladite mesure complémentaire est supérieure à la deuxième valeur prédéterminée, à activer les moyens d'avertissement.
Le tartre déposé contre les parois de la chaudière tubulaire ralentit le transfert thermique entre l'élément chauffant et l'eau, ce qui contribue à l'élévation de la température de la chaudière. Du fait que la détection est effectuée à partir une valeur de température prédéterminée, cette détection est indépendante de la température de l'eau initialement introduite.

De préférence la première valeur prédéterminée est inférieure à la deuxième valeur prédéterminée. De ce fait, la détection peut s'effectuer dès la montée en température de la chaudière. Une telle disposition permet de prévenir plus rapidement l'utilisateur. Toutefois la première valeur prédéterminée peut être supérieure ou égale à la deuxième valeur prédéterminée dans les cas ou la chaudière est chauffée par intermittence, du fait par exemple de la régulation ou d'un fonctionnement alternant des périodes de chauffage à puissance élevée et des périodes de chauffage à puissance réduite ou nulle.

Avantageusement la première valeur prédéterminée est choisie de manière à être située dans la phase de montée en température de la chaudière. Cette disposition permet une détection de l'entartrage plus précoce que le choix d'une valeur située dans la phase dans laquelle la température de la chaudière est relativement stabilisée, ou d'une valeur située au dessus de la température de la chaudière atteinte en régime stabilisé lors du passage de l'eau dans la chaudière.

Avantageusement alors la durée prédéterminée est choisie de manière à rester dans la phase de montée en température de la chaudière lorsque ladite durée est écoulée. Cette disposition permet d'informer rapidement l'utilisateur que l'appareil est entartré plus rapidement que si la durée choisie correspond au régime stabilisé lors du passage de l'eau dans la chaudière. Ainsi l'utilisateur est averti rapidement de l'entartrage après la mise en marche de l'appareil, et il peut couper l'alimentation de l'appareil dès que l'eau a fini de passer dans la chaudière, pour éviter le durcissement du tartre intervenant lors de la chauffe à sec de la chaudière.

Selon un mode de réalisation la deuxième valeur prédéterminée peut être choisie de manière à être supérieure à la température crête obtenue en régime stabilisé avec une chaudière non entartrée. Une telle disposition présente notamment l'avantage d'être peu sensible aux dispersions de puissance des chaudières.

Selon un autre mode de réalisation la deuxième valeur prédéterminée peut être choisie de manière à être inférieure à la température crête mesurée en régime stabilisé lorsque la chaudière n'est pas entartrée. De ce fait, la deuxième valeur prédéterminée est inférieure à la température crête mesurée en régime stabilisé lorsque la chaudière est entartrée, et la détection est effectuée lors de la montée en température de la chaudière. La détection est ainsi plus rapide, et aussi plus précise. Du fait que la détection est réalisée avant que la chaudière ne se stabilise en température, la détection est opérante même avec de faibles quantités d'eau.

Les objets assignés à l'invention sont atteints avec une machine à boissons chaudes, en particulier cafetière, comportant un réservoir d'eau alimentant une chaudière tubulaire comprenant un élément chauffant associé à un tube de circulation d'eau, un capteur de température disposé sur la chaudière, un microcontrôleur comprenant des moyens de mesure du temps ainsi que des moyens de comparaison du signal du capteur de température avec des valeurs prédéterminées, des moyens d'avertissement, du fait que le microcontrôleur est configuré de telle sorte à mettre en oeuvre une méthode de détection de l'entartrage précitée. Un tel appareil permet d'avertir l'utilisateur d'une situation d'entartrage à un stade relativement précoce, ce qui facilite le détartrage.

Avantageusement le capteur de température est disposé en relation thermique avec le tube de circulation d'eau. Cette disposition permet une détection plus précise de la montée en température de la chaudière.

Avantageusement pour faciliter les transferts thermiques le capteur de température est monté sur une bride en matériau bon conducteur de la chaleur.

Avantageusement alors pour faciliter le serrage de la bride et améliorer encore les transferts thermiques le capteur de température est inséré dans une enveloppe en plastique souple.

Avantageusement le capteur de température est un élément NTC. Un tel capteur peut fonctionner dans toute la plage de température rencontrée lors du fonctionnement de la chaudière, avec une grande fiabilité, une bonne précision et une bonne répétitivité des mesures. Un tel capteur peut fonctionner sous basse tension et est peu coûteux.

Avantageusement les moyens de régulation sont formés par un thermostat. Ainsi le dispositif de détection de l'entartrage peut être adapté sur une chaudière existante avec un minimum de modifications. Le dispositif reste indépendant des moyens de régulation et de sécurité.

Avantageusement alors le capteur de température est fixé sur la bride de fixation du thermostat. Cette disposition simplifie en effet la construction.

Avantageusement les moyens de mesure du temps et les moyens de comparaison du signal du capteur de température avec des valeurs prédéterminées sont formés par un microcontrôleur. De tels circuits sont fiables et économiques.

L'invention sera mieux comprise à l'étude d'exemples de réalisation pris à titre nullement limitatifs et illustrés dans les figures annexées dans lesquelles :
- la figure 1 est une vue d'une chaudière de machine à boissons chaudes,
- la figure 2 est une vue de côté en coupe de la chaudière montrée à la figure 1,
- la figure 3 est une vue détaillée d'une partie de la figure 2,
- la figure 4 est une vue du circuit électrique de la machine.

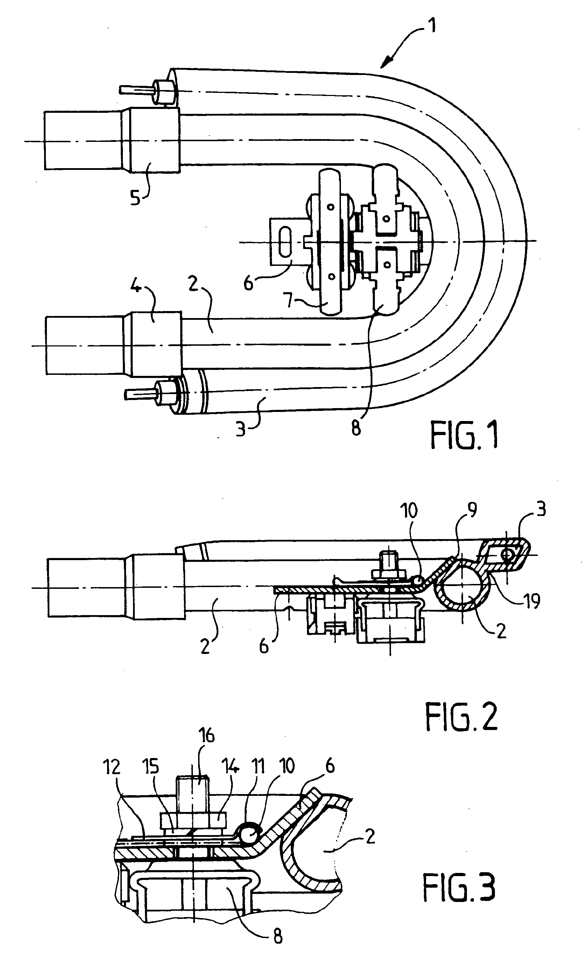

La figure 1 montre une chaudière tubulaire 1 en U d'une machine à boissons chaudes (non représentée aux figures) comportant un tube de circulation d'eau 2 associé à un élément chauffant 3. La chaudière 1 comporte une zone de contact 19 entre le tube de circulation d'eau 2 et l'élément chauffant 3. L'une 4 des extrémités de la chaudière est reliée à un réservoir d'eau alors que l'autre 5 des extrémités de la chaudière est reliée à un conduit de distribution de l'eau chauffée (non représentés aux figures).

Un thermostat 7 et un fusible 8 sont montés sur une bride 6 fixée sur la chaudière 1. La bride 6 est réalisée de préférence en un matériau bon conducteur de chaleur, par exemple un matériau à base d'aluminium ou de cuivre. La bride 6 est disposée dans le coude du U.

Tel que montré à la figure 2 , la bride 6 est fixée sur la chaudière 1 sur le tube de circulation d'eau 2. Un méplat 9 disposé sur le tube 2 en dehors de la zone de contact 19 permet de faciliter la fixation de la bride 6. Cette fixation peut être réalisée par exemple par brasage ou par soudage.

Un capteur de température 10 est monté sur la chaudière 1. Tel que mieux visible à la figure 3, le capteur 10 est monté dans une enveloppe en un matériau plastique souple 11 maintenue entre la bride 6 et une languette 12. La languette 12 est fixée sur la bride 6 au moyen d'un écrou 14 vissé sur une tige filetée 16 issue du thermostat 8. Une rondelle déformable 15 est montée entre l'écrou 14 et la languette 12.

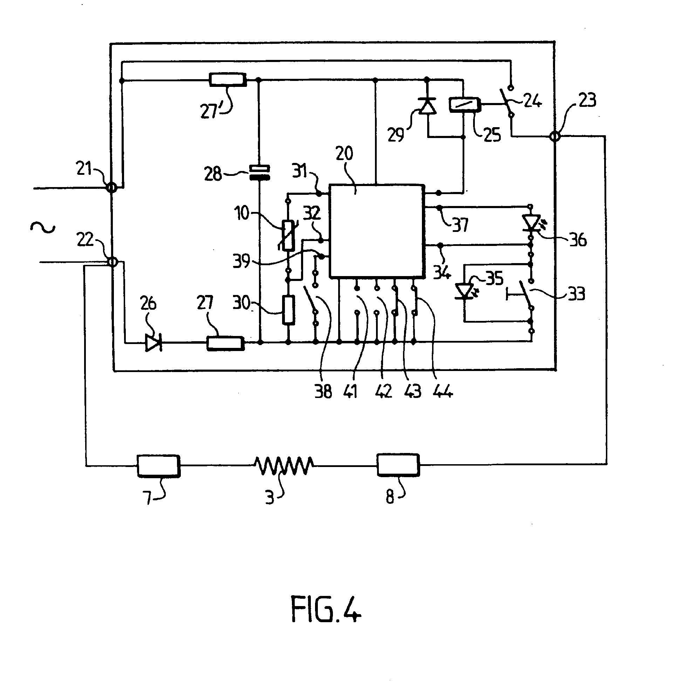

Tel que montré à la figure 4, le circuit électrique de la machine comporte deux bornes 21, 22 prévues pour être reliées à l'alimentation extérieure, associées à un circuit de puissance et à un circuit de commande.

Le circuit de puissance comporte, à partir de la borne 21, l'interrupteur 24 d'un relais 25, une borne 23 à laquelle est relié le thermostat 8 monté en série avec l'élément chauffant 3 et le fusible 7, le fusible 7 étant relié à la borne 22.

Le circuit de commande comporte un ensemble redresseur et diviseur de tension, comprenant une résistance 27, un condensateur 28, une résistance 27' et une diode 26, montés en série entre les bornes 21 et 22. Cet ensemble alimente un microcontrôleur 20 monté en parallèle avec le condensateur 28.

Un interrupteur à impulsions 33 est monté entre une borne 34 du microcontrôleur 20 et la borne d'alimentation 22. Une diode électroluminescente 35 est montée en parallèle avec l'interrupteur 33.

Le capteur de température 10 est une résistance NTC montée entre deux bornes d'entrée 31, 32 du microcontrôleur 20. Une résistance additionnelle 30 est montée entre la borne 32 et la borne d'alimentation 22.

Une diode électroluminescente 36 est montée entre les bornes de sortie 34 et du microcontrôleur 20. Le relais 25 est alimenté par le microcontrôleur 20. Une diode 29 est montée en parallèle avec le relais.

Le microcontrôleur présente également une série de bornes 41, 42, 43, 44 prévues pour programmer le temps de fonctionnement de l'appareil lorsque l'utilisateur a appuyé sur l'interrupteur 33. Tel que représenté à la figure 4, seules les bornes 43 et 44 sont reliées à la borne d'alimentation 22.

Un interrupteur 38 prévu pour la sélection de la marche à demi puissance est monté entre une borne 39 du microcontrôleur et la borne d'alimentation 22.

Le fonctionnement de l'appareil présenté aux figures 1 à 4 est le suivant.

L'utilisateur verse de l'eau dans le réservoir et met en route l'appareil en appuyant sur l'interrupteur 33. Le microcontrôleur 20 envoie un signal au relais 25 pour fermer l'interrupteur 24. L'élément chauffant 3 est alors alimenté.

Le microcontrôleur 20 ouvre l'interrupteur 24 à l'aide du relais 25 lorsqu'un temps prédéterminé s'est écoulé depuis l'actionnement de l'interrupteur à impulsions 33. Le circuit d'alimentation de l'appareil est alors ouvert et seule une nouvelle impulsion sur l'interrupteur 33 permet de réactiver l'appareil. La configuration des bornes 41, 42, 43, 44 reliées ou non à la borne d'alimentation 22 permet par exemple de sélectionner une durée de fonctionnement de 2 heures pour une cafetière équipée d'une verseuse verre, afin d'utiliser la chaudière 1 pour le maintien au chaud, et de 15 minutes pour une cafetière équipée d'une verseuse isotherme, cette dernière durée étant suffisante pour garantir la chauffe de toute l'eau initialement présente dans le réservoir, lorsque la chaudière n'est pas entartrée, ou est peu entartrée.

En outre, plus particulièrement selon l'invention, le microcontrôleur 20 mesure de manière régulière, par exemple toutes les secondes, la température donnée par le capteur 10, et la compare avec une première valeur prédéterminée, par exemple 50°C. Cette température correspond à la phase de montée en température de la chaudière. Tant que la valeur prédéterminée n'est pas atteinte, le microcontrôleur recommence la mesure.

Lorsque la première valeur prédéterminée a été atteinte, le microcontrôleur attend une durée prédéterminée avant d'effectuer une nouvelle mesure. Cette durée est choisie de préférence de manière à rester dans la phase de montée en température de la chaudière lorsque ladite durée est écoulée. Cette durée est par exemple de 30 secondes.

Le microcontrôleur effectue alors une nouvelle mesure et la compare à une deuxième valeur prédéterminée, choisie de manière à être supérieure à la température obtenue avec une chaudière non entartrée. Cette deuxième valeur prédéterminée est par exemple de l'ordre de 85°C. Selon un mode de réalisation la deuxième valeur prédéterminée peut être choisie de manière à être supérieure à la température crête obtenue en régime stabilisé avec une chaudière non entartrée. Selon un autre mode de réalisation la deuxième valeur prédéterminée peut être choisie de manière à être inférieure à la température crête mesurée en régime stabilisé lorsque la chaudière n'est pas entartrée. Selon un troisième mode de réalisation la deuxième valeur prédéterminée peut être choisie de manière à être voisine de la température crête mesurée en régime stabilisé lorsque la chaudière n'est pas entartrée.

Si la dernière mesure est supérieure à la deuxième valeur prédéterminée, le microcontrôleur alimente la diode électroluminescente formant les moyens d'avertissement.

Grâce à cette disposition, l'utilisateur est averti dès la montée en température que sa machine est en train de s'entartrer. II peut alors préparer un produit détartrant pour faire un cycle de détartrage après la préparation de sa boisson.

Dans une chaudière tubulaire, il a été observé que le dépôt de tartre commence à se former en priorité au niveau de la zone de contact 19 entre le tube de circulation d'eau 2 et l'élément chauffant 3. Les échanges thermiques entre l'élément chauffant 3 et le tube 2 restent cependant convenables, le reste de la surface intérieure du tube étant peu affecté par ce dépôt de tartre.

Dans un deuxième temps, un dépôt de tartre friable se forme sur le reste de la surface intérieure du tube 2. Ce dépôt périphérique contribue à réduire la section du tube 2 disponible pour le passage de l'eau. De plus, ce dépôt périphérique limite les échanges thermiques entre le tube 2 et l'eau circulant dans le tube. Lorsque toute l'eau est passée dans la chaudière, la température de la chaudière s'élève, ce qui contribue à durcir le dépôt de tartre périphérique. Un tel dépôt devient difficile à enlever lorsque l'utilisateur ne procède pas au détartrage de manière suffisamment précoce.

Le montage du capteur 10 sur la bride 6 en contact avec la zone périphérique du tube de circulation d'eau 2 permet de détecter l'élévation de la température de la chaudière 1 due au dépôt de tartre périphérique. Grâce à la méthode de détection selon l'invention, la détection de l'entartrage intervient dès la montée en température de la chaudière. L'utilisateur peut ainsi intervenir de manière plus précoce et plus efficace.

De plus l'interrupteur à impulsion 33 associé au dispositif d'arrêt de l'alimentation après une durée déterminée contribue à limiter la chauffe de la chaudière en l'absence d'eau, et par là même à limiter le durcissement du tartre par cuisson, ce qui favorise la limitation de l'entartrage.

En alternative, lorsque ladite première valeur prédéterminée a été atteinte, la méthode de détection de l'entartrage selon l'invention peut également consister à effectuer au moins une autre mesure de température, à calculer la dérivée de la température et à comparer la valeur obtenue avec une valeur de référence, et si ladite valeur obtenue est supérieure à la valeur de référence, à activer les moyens d'avertissement. Des moyens de comparaison du signal du capteur de température et/ou de sa dérivée avec des valeurs prédéterminées sont alors nécessaires. Ces moyens de comparaison peuvent être formés par un microcontrôleur. Ainsi cette version de la méthode de détection est équivalente au deuxième mode de réalisation du premier exemple de la méthode de détection, dans lequel la deuxième valeur prédéterminée est inférieure à la température crête mesurée en régime stabilisé lorsque la chaudière n'est pas entartrée, ce qui revient à mesurer une pente.

De nombreuses améliorations peuvent être apportées à cet appareil dans le cadre des revendications.

Notamment le dispositif peut être monté sur une chaudière tubulaire ne présentant pas une configuration en U. Le capteur de température peut être monté de manière indépendante du thermostat, par exemple sur une bride disposée du côté de la sortie d'eau chaude de la chaudière, cette zone présentant l'entartrage le plus rapide.

Le capteur de température utilisé pour la détection de l'entartrage peut également être utilisé pour la régulation de la température de la chaudière.

Les moyens d'avertissement lumineux formés par la diode électroluminescente 36 pourraient être remplacés par d'autres moyens d'avertissement, par exemple des moyens d'avertissement sonores.

## Revendications

1. Méthode de détection de l'entartrage d'une chaudière tubulaire (1) de machine à boissons chaudes, ladite machine comportant une chaudière tubulaire alimentée par un réservoir d'eau froide, un capteur de température (10) disposé sur la chaudière, des moyens de mesure du temps, des moyens de comparaison du signal du capteur de température avec des valeurs prédéterminées, des moyens d'avertissement, **caractérisée en ce qu'**elle consiste :
- après mise en marche de la machine, à mesurer la température à l'aide du capteur,
- à comparer la mesure avec une première valeur prédéterminée,
- si ladite valeur n'est pas atteinte, à effectuer une nouvelle mesure de température et à comparer ladite nouvelle mesure avec ladite première valeur prédéterminée,
- lorsque ladite première valeur prédéterminée a été atteinte, à attendre pendant une durée prédéterminée,
- lorsque ladite durée a été atteinte, à mesurer la température à l'aide du capteur et à comparer la mesure complémentaire ainsi obtenue avec une deuxième valeur prédéterminée,
- si ladite mesure complémentaire est supérieure à la deuxième valeur prédéterminée, à activer les moyens d'avertissement.

2. Méthode selon la revendication 1, **caractérisée en ce que** la première valeur prédéterminée est inférieure à la deuxième valeur prédéterminée.

3. Méthode selon l'une des revendications 1 ou 2, **caractérisée en ce que** la première valeur prédéterminée est choisie de manière à être située dans la phase de montée en température de la chaudière.

4. Méthode selon l'une des revendications 1 à 3, **caractérisée en ce que** la durée prédéterminée est choisie de manière à rester dans la phase de montée en température de la chaudière lorsque ladite durée est écoulée.

5. Méthode selon l'une des revendications 1 à 4, **caractérisée en ce que** la deuxième valeur prédéterminée est choisie de manière à être supérieure à la température crête obtenue en régime stabilisé avec une chaudière non entartrée.

6. Méthode selon l'une des revendications 1 à 5, **caractérisée en ce que** la deuxième valeur prédéterminée est choisie de manière à être inférieure à la température crête obtenue en régime stabilisé avec une chaudière non entartrée.

7. Machine à boissons chaudes, en particulier cafetière, comportant un réservoir d'eau alimentant une chaudière tubulaire (1) comprenant un élément chauffant (3) associé à un tube de circulation d'eau (2), un capteur de température (10) disposé sur la chaudière, un microcontrôleur (20) comprenant des moyens de mesure du temps ainsi que des moyens de comparaison du signal du capteur de température avec des valeurs prédéterminées, des moyens d'avertissement (36), **caractérisée en ce que** le microcontrôleur est configuré de telle sorte à mettre en oeuvre une méthode de détection de l'entartrage de la chaudière tubulaire (1) selon l'une des revendications 1 à 6.

8. Machine à boissons chaudes selon la revendication 7 **caractérisée en ce que** le capteur de température (10) est disposé en relation thermique avec le tube de circulation d'eau (2).

9. Machine à boissons chaudes selon l'une des revendications 7 ou 8 **caractérisée en ce que** le capteur de température (10) est monté sur une bride (6) en matériau bon conducteur de la chaleur.

10. Machine à boissons chaudes selon la revendication 9 **caractérisée en ce que** le capteur de température (10) est inséré dans une enveloppe en plastique souple (11).

11. Machine à boissons chaudes selon l'une des revendications 7 à 10, **caractérisée en ce que** le capteur est un élément NTC.

12. Machine à boissons chaudes selon l'une des revendications 7 à 11, **caractérisée en ce que** les moyens de régulation sont formés par un thermostat (8).

13. Machine à boissons chaudes selon l'une des revendications 9 et 12 **caractérisée en ce que** le capteur de température (10) est fixé sur la bride (6) de fixation du thermostat (8).

## Claims

1. A method of detecting scale build-up in a tube boiler (1) of a hot beverage machine, said machine including a tube boiler fed by a cold water reservoir, a temperature sensor (10) disposed on the boiler, time measurement means, comparator means for comparing the signal from the temperature sensor with predetermined values, and warning means, said method being **characterized in that** it consists:
**·** after switching on the machine, in measuring temperature by means of the sensor;
· in comparing the measurement with a first predetermined value;
· if said value is not reached, in taking a further temperature measurement and in comparing said further measurement with said first predetermined value;
**·** once said first predetermined value has been reached, in waiting for a predetermined time;
**·** once said time has elapsed, in measuring the temperature by means of the sensor and in comparing the resulting additional measurement with a second predetermined value; and
**·** if said additional measurement is greater than the second predetermined value, in activating the warning means.

2. A method according to claim 1, **characterized in that** the first predetermined value is less than the second predetermined value.

3. A method according claim 1 or claim 2, **characterized in that** the first predetermined value is chosen such that it lies within the stage during which the boiler is being brought up to temperature.

4. A method according to any one of claims 1 to 3, **characterized in that** the predetermined time is chosen such that it remains within the stage during which the boiler is being brought up to temperature once said time has elapsed.

5. A method according to any one of claims 1 to 4, **characterized in that** the second predetermined value is chosen such that it is greater than the peak temperature obtained under stabilized operating conditions with a scale-free boiler.

6. A method according to any one of claims 1 to 5, **characterized in that** the second predetermined value is chosen such that it is less than the peak temperature obtained under stabilized operating conditions with a scale-free boiler.

7. A hot beverage machine, in particular a coffee machine, including a water reservoir feeding a tube boiler (1) comprising a heater tube (3) associated with a water flow tube (2), a temperature sensor (10) disposed on the boiler, a microcontroller (20) comprising time measurement means and comparator means for comparing the signal from the temperature sensor with predetermined values, and warning means (36), said machine being **characterized in that** the microcontroller is configured such that it implements a method according to any one of claims 1 to 6 for detecting scale build-up in the tube boiler (1).

8. A hot beverage machine according to claim 7, **characterized in that** the temperature sensor (10) is disposed in thermal communication with the water flow tube (2).

9. A hot beverage machine according to claim 7 or claim 8, **characterized in that** the temperature sensor (10) is mounted on a tab (6) made of a material that is a good conductor of heat.

10. A hot beverage machine according to claim 9, **characterized in that** the temperature sensor (10) is inserted in a casing (11) made of a flexible plastics material.

11. A hot beverage machine according to any one of claims 7 to 10, **characterized in that** the sensor is a Negative Temperature Coefficient (NTC) element.

12. A hot beverage machine according to any one of claims 7 to 11, **characterized in that** the regulation means are formed by a thermostat (8).

13. A hot beverage machine according to claim 9 or claim 12, **characterized in that** the temperature sensor (10) is fastened to the tab (6) for fastening the thermostat (8).

## Patentansprüche

1. Verfahren zur Erfassung der Verkalkung einer röhrenförmigen Heizvorrichtung (1) einer Maschine für Heißgetränke, wobei die Maschine eine röhrenförmige, von einem Kaltwasserbehälter gespeiste Heizvorrichtung, einen an der Heizvorrichtung angebrachten Temperatursensor (10), Mittel zur Zeitmessung, Mittel zum Vergleichen des vom Temperatursensor abgegebenen Signals mit vorbestimmten Werten und Warnmittel aufweist, **dadurch gekennzeichnet, dass** es darin besteht:
- die Temperatur nach dem Einschalten der Maschine mit Hilfe des Sensors zu messen,
- den Messwert mit einem ersten vorbestimmten Wert zu vergleichen,
- wenn der Wert nicht erreicht ist, eine neue Temperaturmessung durchzuführen und den neuen Messwert mit dem ersten vorbestimmten Wert zu vergleichen,
- eine-vorbestimmte Zeitdauer zu warten, wenn der erste vorbestimmte Wert erreicht wurde,
- die Temperatur mit Hilfe des Sensors zu messen und den somit erhaltenen zusätzlichen Wert mit einem zweiten vorbestimmten Wert zu vergleichen, wenn die Zeitdauer erreicht ist,
- die Warnmittel zu aktivieren, wenn der zusätzliche Messwert größer ist als der zweite vorbestimmte Wert.

2. Verfahren nach Anspruch 1, **dadurch gekennzeichnet, dass** der erste vorbestimmte Wert kleiner ist als der zweite vorbestimmte Wert.

3. Verfahren nach Anspruch 1 oder 2, **dadurch gekennzeichnet, dass** der erste vorbestimmte Wert so gewählt ist, dass er in der Temperaturanstiegsphase der Heizvorrichtung liegt.

4. Verfahren nach einem der Ansprüche 1 bis 3, **dadurch gekennzeichnet, dass** die vorbestimmte Zeitdauer so gewählt ist, dass sie in der Temperaturanstiegsphase der Heizvorrichtung bleibt, wenn die Zeitdauer abgelaufen ist.

5. Verfahren nach einem der Ansprüche 1 bis 4, **dadurch gekennzeichnet, dass** der zweite vorbestimmte Wert so gewählt ist, dass er größer ist als die Spitzentemperatur, die mit einer nicht verkalkten Heizvorrichtung im stabilisierten Betrieb erhalten wird.

6. Verfahren nach einem der Ansprüche 1 bis 5, **dadurch gekennzeichnet, dass** der zweite vorbestimmte Wert so gewählt ist, dass er kleiner ist als die Spitzentemperatur, die mit einer nicht verkalkten Heizvorrichtung im stabilisierten Betrieb erhalten wird.

7. Maschine für Heißgetränke, insbesondere Kaffeemaschine, mit einem Wasserbehälter, der eine röhrenförmige Heizvorrichtung (1) speist, welche ein einem Wasserumlaufrohr (2) zugeordnetes Heizelement (3), einen an der Heizvorrichtung angeordneten Temperatursensor (10), eine Mikrosteuereinheit (20) mit Mitteln zur Zeitmessung und Mitteln zum Vergleichen des vom Temperatursensor abgegebenen Signals mit vorbestimmten Werten sowie Warnmittel (36) aufweist, **dadurch gekennzeichnet, dass** die Mikrosteuereinheit so ausgebildet ist, dass ein Verfahren zur Erfassung der Verkalkung der röhrenförmigen Heizvorrichtung (1) nach einem der Ansprüche 1 bis 6 angewendet wird.

8. Maschine für Heißgetränke nach Anspruch 7, **dadurch gekennzeichnet, dass** der Temperatursensor (10) so angeordnet ist, dass er sich mit dem Wasserumlaufrohr (2) in Wärmeverbindung befindet.

9. Maschine für Heißgetränke nach Anspruch 7 oder 8, **dadurch gekennzeichnet, dass** der Temperatursensor (10) an einem Bügel (6) aus einem Material angebracht ist, das die Wärme gut leitet.

10. Maschine für Heißgetränke nach Anspruch 9, **dadurch gekennzeichnet, dass** der Temperatursensor (10) in eine Hülle (11) aus nachgiebigem Material eingesetzt ist.

11. Maschine für Heißgetränke nach einem der Ansprüche 7 bis 10, **dadurch gekennzeichnet, dass** der Sensor ein NTC-Element ist.

12. Maschine für Heißgetränke nach einem der Ansprüche 7 bis 11, **dadurch gekennzeichnet, dass** die Regulierungsmittel durch einen Thermostat (8) gebildet sind.

13. Maschine für Heißgetränke nach einem der Ansprüche 9 und 12, **dadurch gekennzeichnet, dass** der Temperatursensor (10) am Bügel (6) zur Befestigung des Thermostats (8) befestigt ist.
